Europäisches Patentamt

European Patent Office

Office européen des brevets

(19)

(11) EP 0 339 645 B1

(12) **EUROPEAN PATENT SPECIFICATION**

(45) Date of publication and mention
of the grant of the patent:
**04.09.1996 Bulletin 1996/36**

(51) Int Cl.⁶: **G03B 27/62**, G03B 27/46

(21) Application number: **89107677.0**

(22) Date of filing: **27.04.1989**

(54) **Device for reading bar codes on photographic film**

Vorrichtung zum Lesen von Bar-Codes auf einem photographischen Film

Dispositif de lecture de codes à barres sur une pellicule photographique

(84) Designated Contracting States:
**DE FR GB**

(30) Priority: **28.04.1988 JP 106104/88**

(43) Date of publication of application:
**02.11.1989 Bulletin 1989/44**

(73) Proprietor: **Fuji Photo Film Co., Ltd.**
**Kanagawa-ken (JP)**

(72) Inventor: **Takenaka, Yuji**
**c/o Fuji Photo Film Co. Ltd.**
**Ashigarakami-gun Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 339 376**          **WO-A-86/03041**
**US-A- 4 219 737**

• **PATENT ABSTRACTS OF JAPAN, vol. 6, no. 2,**
**(P-96)[880], 8th January 1982 & JP-A-56128933**

## Description

BACKGROUND OF THE INVENTION

Field of the Invention:

The present invention relates to a device for reading bar codes on a photographic film which is capable of identifying the numbers and the positions of image frames by reading the bar codes affixed to the image frames.

Description of the Related Art:

In a photographic printing apparatus, a photographic film such as a negative or positive film is mounted on a negative carrier. This carrier together with the photographic film is disposed at a printing position in a printing apparatus body for printing. The long negative mounted on the negative carrier is conveyed in the longitudinal direction thereof by a conveying device mounted on the negative carrier so that the image frames can be sequentially located at the printing position for printing.

Such a photographic printing apparatus is known from EP-A-0 339 376 which document is cited in accordance with Article 54(3) EPC and therefore is only to be considered with respect to novelty. Here, bar codes are affixed to the individual image frames at the same positions relative to the individual image frames. An image frame is selected for printing by reading the bar code affixed to the image frame by a sensor, the selected image frame being automatically positioned at the printing position using a notch formed in correspondence with each of the image frames. The bar codes correspond to the frame numbers which are assigned to the frames in a predetermined order in the longitudinal direction of a negative. This enables the bar code corresponding to a desired frame number to be retrieved by inputting the frame number by an operator therefore, it is possible to facilitate the positioning of desired image frames even when printing of the image frames is performed discontinuously for reprinting or making additional copies.

However, figures representing image frame numbers or the name of a film maker may also be provided on a negative at positions which form the same locus as that of the bar codes. In consequence, the sensor may erroneously read the figures or the letters as bar codes. This leads to a misalignment of a desired image frame or an erroneous detection of a desired bar code. This problem can be solved if other symbols or figures are provided at positions at which the locus thereof does not coincide with that of the bar codes. However, it is impossible to ensure sufficient space for these symbols and figures because the portion of the negative,other than the image frames, is small.

On the other hand, reference WO-A-86/03041 discloses a device for reading bar codes affixed to a recording medium including a sensing device having a plurality of separate sensors disposed transverse to the direction in which the recording material is being conveyed. The determination of the bar code is based on the principle that when a full bar passes, all of the sensors will respond; when a half bar passes, then only the lower half of sensors will respond; and when a blank bar passes, then there will be no response from any of the sensors.

SUMMARY OF THE INVENTION

In view of the above-described disadvantage of the related art, an object of the present invention is to provide a photographic film bar code reading device which is capable of reliably reading only the bar codes affixed to a photographic film.

The present invention achieves its object by providing a device for reading bar codes comprising the features set out in claim 1.

In accordance with the present invention, the bar code reading device includes a plurality of symbol reading means disposed transverse to the direction in which the photographic film is conveyed for reading symbols, a comparison means for comparing the results of reading performed by the plurality of symbol reading means, and a determination means for determining whether or not a symbol that has been read is a bar code on the basis of the comparison results of the comparison means.

In the present invention, symbols on a photographic film are read by a plurality of symbol reading means while the photographic film is being conveyed. The plurality of symbol reading means are disposed transverse to the direction in which the photographic film is conveyed. Generally, the symbols such as bar codes are symmetrical in the longitudinal direction thereof (in the direction perpendicular to the direction in which the photographic film is conveyed). In consequence, when a suitable bar code is read, all the detection results coincide with each other.

As a result, if it is determined by the comparison means that the detection results of the plurality of symbol reading means are not identical, the determination means determines that a symbol including a figure other than a bar code is read. This prevents an image frame from being shifted when it is to be positioned, which would occur when a symbol other than a bar code is erroneously detected as a bar code.

BREIF DESCRIPTION OF THE DRAWINGS

Fig. 1 is a schematic view of an example of a photographic printing apparatus to which the present invention is applied;
Fig. 2 is a plan view of a negative;
Fig. 3 is a block diagram of a data conversion circuit of a position information detecting sensor;
Figs. 4(A) to 4(B) illustrate the procedure for determining a bar code on the basis of the detection results of detecting units;

Figs. 5(A) and 5(B) show how the outputs of the detecting units change as a bar code moves along;

Fig. 6 illustrates how a bar code is set in a table; and

Figs. 7 to 9 are flow charts of the control routines.

DETAILED DESCRIPTION OF THE PREFERRED EMBODIMENTS

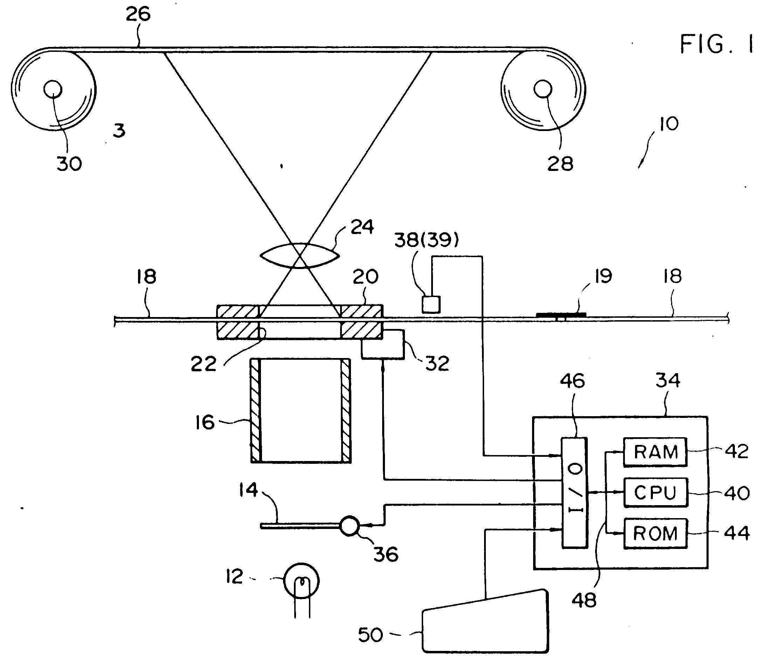

Fig. 1 shows a photographic printing apparatus 10 to which the present invention is applied. In this photographic printing apparatus, light emitted from a light source 12 passes through a shutter 14 and a light diffusing cylinder 16 and reaches a negative 19 which is a photographic film. The negative 18 carries a plurality of image frames in the longitudinal direction thereof. The end portion of the negative 18 is coupled to another negative 18 having the same form by splicing tape 19. This enables a plurality of negatives to be successively conveyed.

The negative 18 is held by a negative carrier 20. The negative carrier 20 has an opening 22. An image of the image frame located at this opening 22 is formed on a lens 24. The negative 18 has notches 18b formed on each image frame. A desired image frame can be readily located at the printing position by detecting the corresponding notch 18B by a notch detecting sensor (not shown) . The notches 18B are formed on the negative 18 by a notch puncher (not shown) after the development of the negative 18.

The light that passes through the lens 24 reaches an emulsion coated surface of a sheet of printing paper 26 to cause the printing paper 26 to be exposed to the light. The two ends of the printing paper 26 are respectively wound around winding rollers 28 and 30. Each time one image is formed on the printing paper 26, the sheet of printing paper 26 is unwound from the roller 28 and wound around the roller 30.

The negative carrier 20 is provided with a driving device 32 for conveying the negative 18. The driving device 32 is driven by a signal sent from a control device 34. The driving device 32 is a pulse motor which conveys the negative 18 in accordance with the number of pulses supplied from the control device 34. In this embodiment, the negative is conveyed by 0.1 mm per one pulse supplied to the pulse motor. The shutter 14 is also connected to the control device 34 through a driver 36 so that it can be opened for a predetermined period of time when printing is performed.

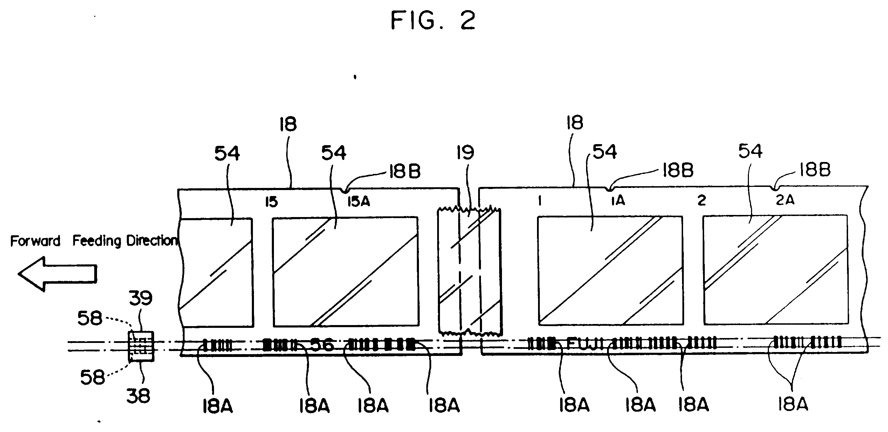

A pair of position information detecting sensors 38 and 39, which serve as position information detecting means, are disposed on the upstream side of the negative carrier in order to read bar codes 18A (see Fig. 2) provided on the negative 18 while the negative 18 is being conveyed. The position information detecting sensors 38 and 39 are provided in the longitudinal direction of the bar code 18A so that the presence or non-presence of a bar code 18A can be detected in the vicinity of the two longitudinal end portions of the bar code 18A. The data representing the bar code 18A read by the position information detecting sensors 38 and 39 is supplied to the control device 34.

Symbols other than the bar codes 18A or characters may be provided on the negative 18 at positions which form the same locus as that of the bar codes 18A. More specifically, Arabic figures representing frame numbers may be provided on the negative in addition to the bar codes 18A. These Arabic figures may be read as bar codes by mistake 18A, causing read errors. While the bar codes 18A have the same height, the figures are not symmetrical in the vertical direction. In consequence, the control device 34 makes a determination as to whether or not the detected values of the two position information detecting sensors 38 and 39 coincide with each other, thereby preventing erroneous reading of symbols other than the bar code.

The control device incorporates a CPU 40, a RAM 42, a ROM 44, an I/O (input/output) port 46 and a data bus and control bus that interconnect these components. The driver 36 for the shutter 14, the driving device 32 and the position information detecting sensors 38 and 39 are all connected to the I/O 46 through signal lines. Also, a keyboard 50 is connected to this I/O 46.

As shown in Fig. 2, the bar codes 18A are provided on the negative 18 at the same positions relative to individual image frames 54. The position information reading sensors 38 and 39 are disposed at positions which are on the locus of the bar codes 18A.

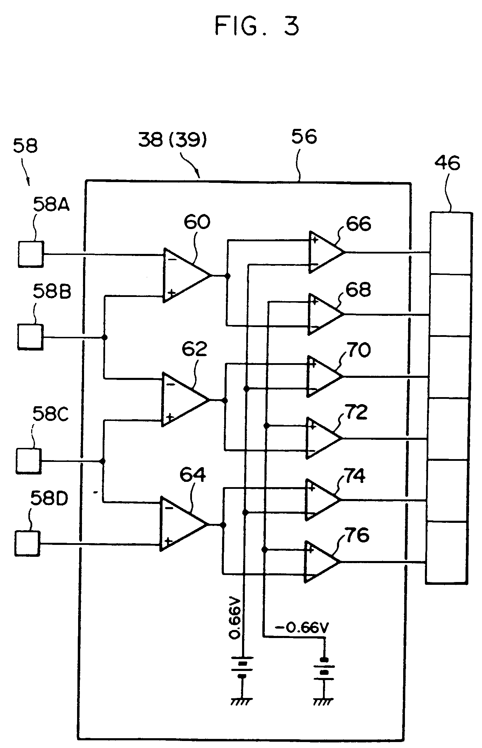

The bar codes 18A correspond to the image frame numbers. The data read by the position information reading sensors 38 and 39 is passed through a data conversion circuit 56 (see Fig. 3). The converted data is used to recognize the frame number corresponding to the bar code 18A which is represented by the data read by the position information reading sensors 38 and 39. In consequence, the frame number designated by the keyboard 50 can be retrieved by comparing the frame number detected on the basis of the data read by the position information reading sensors with the designated frame number. The frame numbers are appended in a predetermined order (for example, in the order of 1, 1A, 2, 2A, 3, 3A ...). The frame numbers are stored in the RAM 42 of the control device 34.

The position information detecting sensor 38 (39) has four detecting units 58A, 58B, 58C and 58D and the data conversion circuit 56, as shown in Fig. 3. The bars that form a bar code 18A fall into two types: a wide one and a narrow one. The distance required for the detecting units 58A, 58B, 58C and 58D to be disposed is equivalent to the width of the wide bar. The bar code which has the narrower width equals to the space required for the two detecting units.

The detecting unit 58A is connected to a negative input terminal of a first differential unit 60. The detecting unit 58B is connected to a positive input terminal of the first differential unit 60 and to a negative input terminal of a second differential unit 62. The detecting unit 58C is connected to a positive input terminal of the second differential unit 62 and to a negative input terminal of a third differential unit 64. The detecting unit 58D is connected to a positive input terminal of the third differential unit 64.

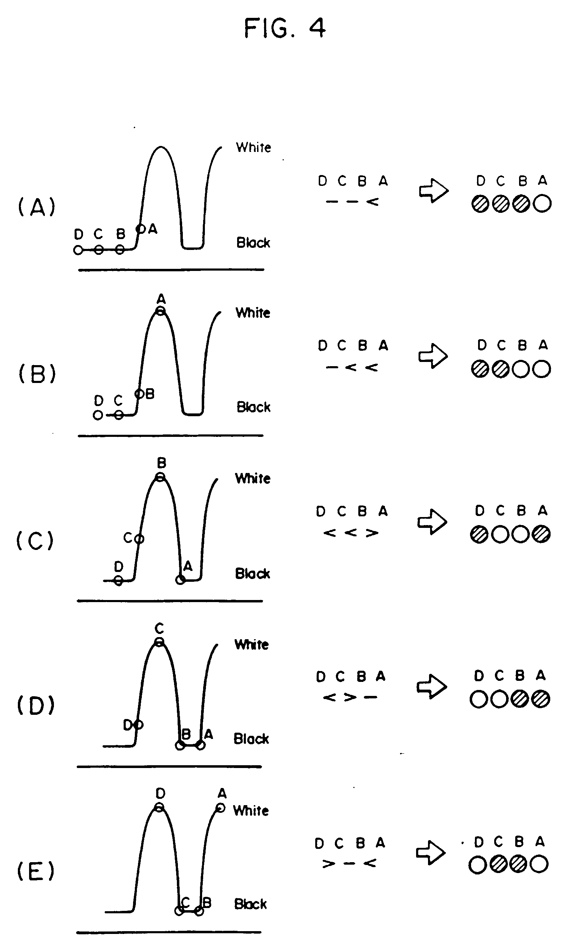

The output of the first differential unit 60 is connected to a positive input terminal of a first comparator 66 and to a negative input terminal of a second comparator 68. The output of the second differential unit 62 is connected to a positive input terminal of a third comparator 70 and a negative input terminal of a fourth comparator 72. The output of the third differential unit 64 is connected to a positive input terminal of a fifth comparator 74 and to a negative input terminal of a sixth comparator 76. Further, a voltage of +V (which is 0.66 V) is applied to the negative input terminals of the first, third and fifth comparators 66, 70 and 74, and a voltage of -V (which is -0.66 V) is applied to the positive input terminals of the second, fourth and sixth comparators 68, 72 and 76. In consequence, data representing a value determined by a difference in the outputs of the adjacent detecting units in accordance with an absolute value is input to the I/O 46 of the control device 34. In other words, the first and second comparators output high level signals when IA - BI > 0.66 V. When IA - B < 0.66 V, they output low level signals. In this way, the difference in the outputs of the adjacent detecting units can be determined. The detected data representing the output differences is supplied to the control device 34. The control device 34 determines, in response to the differences in the outputs of the detecting units 58A, 58B, 58C and 58D, whether a white portion or a black portion of a bar code 18A is passing through the detection position. It also determines the width of a bar which is passing through the detection position (whether a wide bar or a narrow bar is passing). The determination procedure will be described below with reference to Fig. 4. Here, the outputs of the detecting units 58A, 58B, 58C and 58D are respectively simplified as A, B, C and D.

In a case where it is determined that A > B = C = D, as shown in Fig. 4 (A), A only is larger than the other outputs, which means that a white bar is passing through the detecting unit 58A.

Next, the negative moves to become in the condition shown in Fig. 4(B). When the control device 34 determines that A > B > C = D, it is determined that A and B have differences in output between others, which means that the detecting units 58A and 58B are together detecting the white bar.

Next, the control device 34 determines that A < B > C > D, as shown in Fig. 4 (C). This means that the white bar passed through the detecting unit 58A and that the detecting units 58B and 58C are together detecting the white bar. In consequence, the control device recognizes that the detected bar is a narrow white bar.

Subsequently, the control device 34 determines that A = B > C > D, as shown in Fig. 4 (D). A, B, C and D are shifting in the forward direction from the state shown in Fig. 4 (C), and the control device confirms that the negative is moving in the forward direction.

Thereafter, the control device determines that A > B = C < D, as shown in Fig. 4 (E). This means that only the detecting units 58B and 58C are together detecting the black bar. The control device therefore recognizes that the previously detected narrow white bar is followed by a narrow black bar.

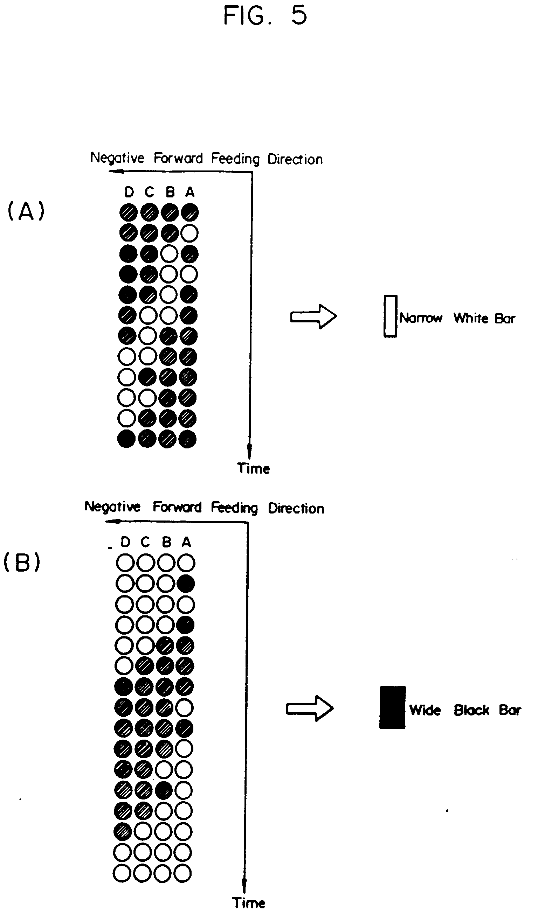

Fig. 5 shows changes in the outputs of the detecting units 58A, 58B, 58C and 58D which occur as a bar code 18A passes through the detecting units. More specifically, Fig. 5(A) shows changes in the outputs of the detecting units 58A, 58B, 58C and 58D which occur as a narrow white bar code passes through the detecting units. Fig. 5(B) shows changes in the outputs of the detecting units 58A, 58B, 58C and 58D which occur as a wide black bar passes the detecting units. As can be seen in Figs. 5(A) and 5(B), it is thus possible to check whether the negative is stopped or fed in the reverse direction.

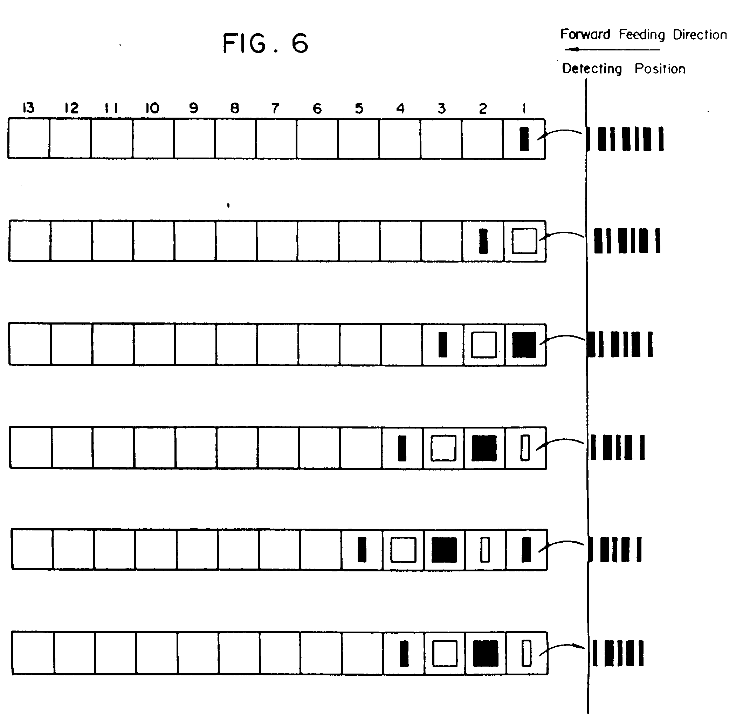

By repeating the above-described detection, the control device 34 sequentially inserts a combination of bars (13 bars in this embodiment) that form a bar code 18A in a table or a buffer) of the RAM 42. At that time, the detected bar is always inserted from a first portion of the table (from the right side of the table, as viewed in Fig. 6), the already inserted bars being individually shifted to the left as a newly detected bar is inserted in the table. In a case where the negative 18 is fed in the reverse direction, the bars inserted in the table are extracted from the right side of the table. At that time, the individual bars are shifted to the right in the table, as a bar is extracted from the table. Once 13 segments of the table are filled with bars that form a bar code 18A, the control device 34 performs data matching, that is, the control device 34 collates the image frame number corresponding to the detected bar code 18A.

In this embodiment, the control device 34 operates a number of pulses that are applied to the pulse motor in order to obtain a bar code reading position corresponding to frame number 0 (a reference position) by using the frame number corresponding to the read bar code 18A and the number of pulses which has been applied to the pulse motor in order to position that bar code at the bar code detected position. For example, if the read bar code 18A represents frame number 2A and the number of pulses applied to the pulse motor is 1000, the number of pulses required to obtain a bar code reading position representing frame number 0 is obtained by the following equation:

$$5 \times 190 + 1000 = 1950$$

where 5 represents the number of steps by which the bar code representing frame number 2A is separated from the bar code identifying frame number 0, and 190 represents pulses/one step which is equivalent to image frame pitch of half size images.

In this embodiment, the above-described calculation is performed by reading two consecutive different bar codes in the longitudinal direction of the negative when the negative is being conveyed. If the number of pulses required for the reference position which is calculated on the basis of reading of a preceding bar code of the consecutive different bar codes, does not coincide with that for the reference position, which is calculated on the basis of reading a subsequent bar code of the consecutive different bar codes, the number of pulses corresponding to the reading of the preceding bar code is cancelled. In addition, the number of pulses for the reference position which is calculated on the basis of reading of another bar code following the reading of the subsequent bar code is obtained. The obtained number of pulses is then compared with the number of pulses calculated on the basis of the reading of the subsequent bar code. This calculation and comparison are repeated until the number of pulses required for the reference position, which are calculated on the basis of the readings of two consecutive different bar codes become identical. This enables an accurate number of pulses required for the reference position to be obtained.

In this way, it is possible to determined that predetermined number of pulses per pitch are respectively made to represent the bar code positions with the -reference position serving as a starting point.
Further, since the frame numbers are appended in a predetermined order, it is possible to determine whether or not the reading is performed accurately by comparing the frame number calculated using the calculated number of pulses with the actually read frame number.

The position information detection unit 58 also detects the connected portion of the negatives 18. More specifically, the control device 34 determines that the beginning of a new negative 18 has been detected when the position information detecting unit 58 detects the splicing tape 19 that connects the negatives 18. The control device then updates the frame numbers stored in the RAM 42 each time the splicing tape 19 is detected so as to newly define the number of pulses required for the reference position.

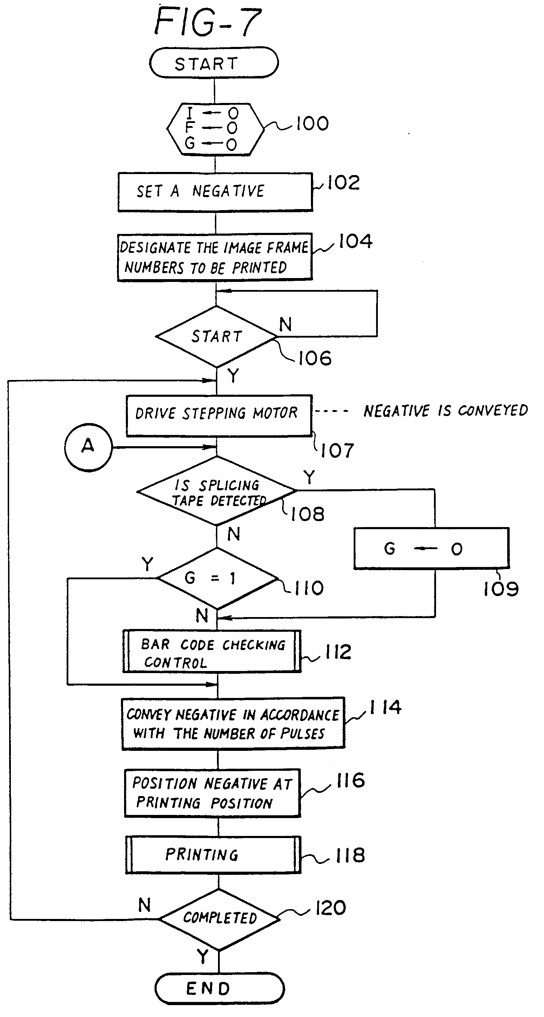

Figs. 7 to 9 are flowcharts of the operation of this embodiment.

As shown in Fig. 7, variable I is set to 0, and flags F and G are reset, i.e., become 0, in step 100. Next, a negative 18 is set in step 102, and the frame numbers representing the image frames on which printing is to be performed are then designated in step 104. The frame numbers designated may be successive or intermittent.

Next, an operator switches on a start switch or the like to start the printing operation in step 106. The driving device 32 is thereby driven (the stepping motor is started) in step 107. Subsequently, it is determined in step 108 whether or not the splicing tape 19 is detected. If the answer is no, the control device determines that a subsequent negative 18 is not yet supplied, and the processing goes on to step 110 where it is determined whether or not flag G is set. If the answer is no, the control device determines that the bar code positions and the number of pulses for the stepping motor are not yet collated with each other (the number of pulses required for the reference position is not yet set). Processing then proceeds to step 112 where the bar code checking control routine is executed. This bar code checking control routine will be described later in detail.

If the splicing tape 19 is detected in step 108, the processing goes to step 109 where the flag G is reset. The processing then goes on to step 112. Further, if it is determined in step 110 that the flag G is set, since the bar codes and the numbers of pulses are collated with each other (the number of pulses required for the reference point is set), the processing skips step 112 and goes on to step 114.

In step 114, the negative is conveyed in accordance with the number of pulses required for the designated frame number position. The designated image frame is then located at the printing position in step 116. Once the designated image frame has been located at the printing position, printing is processed in step 118. Next, it is determined in step 120 whether or not the printing of the designated image frames is completed. If the answer is no, the processing returns to step 107. In this way, the designated image frames are sequentially located at the printing position and printing is sequentially performed on the image frames located at the printing position. Once printing has been performed on all the designared image frames, this control routine is complete.

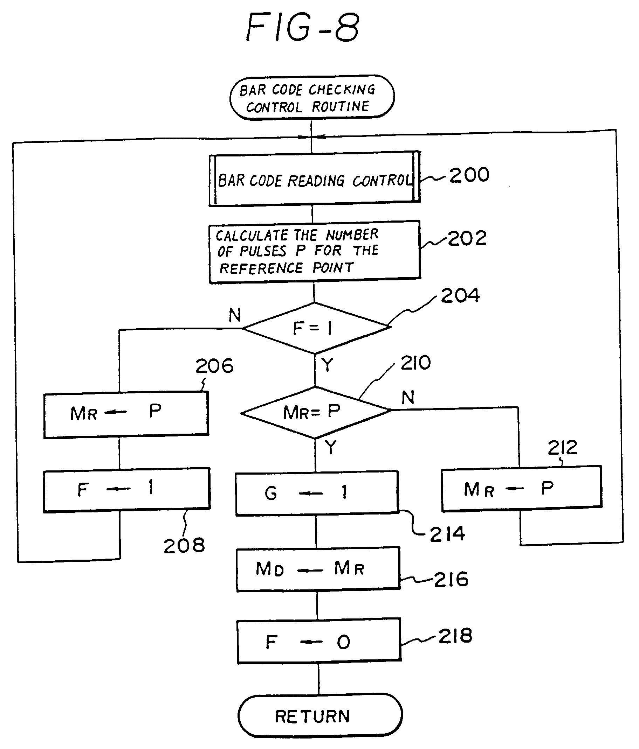

Next, the bar code checking control subroutine, which is executed in step 112, will be described below with reference to the flowchart in Fig. 8.

First, the bar code reading control subroutine which is described later is executed in step 200. Once the bar code is read, the number of pulses P required for the reference point (the frame number 0 position in this embodiment) is calculated on the basis of this bar code using the above-described equation in step 202. Next, it is determined in step 204 whether or not flag F is set. Since flag F is in a reset stage at the first bar code reading time, the processing goes on to step 206 where the calculated value P is written in a holding memory MR. Next, 1 is set in flag F in step 208, and the processing then returns to step 200. If it is determined in step 204 that 1 is set in flag F, since the holding memory $M_R$ stores the calculated value P, the calculated value P is compared with the value in the holding memory $M_R$ in step 210. If $M_R \neq P$, the processing goes to step 212 where the newly calculated value P is written in the holding memory $M_R$ (the value in the holding memory $M_R$ is updated), and the processing then returns to step 200 so as to exccute steps 202, 204, 210 and 212.

If it is determined in step 210 that $M_R = P$, the control device determines that the number of pulses required for the reference point has been precisely calculated, and the processing proceeds to step 214 where 1 is set in flag G, which indicates that the number of pulses for the reference position employed in the checking control executed in step 110 of the main routine (Fig. 7) has been defined. Next, in step 216, the value stored in the holding memory $M_R$ is written in the defined memory $M_D$. Subsequently, the flag F is reset in step 218, thereby completing this bar code checking control subroutine and returning to step 114.

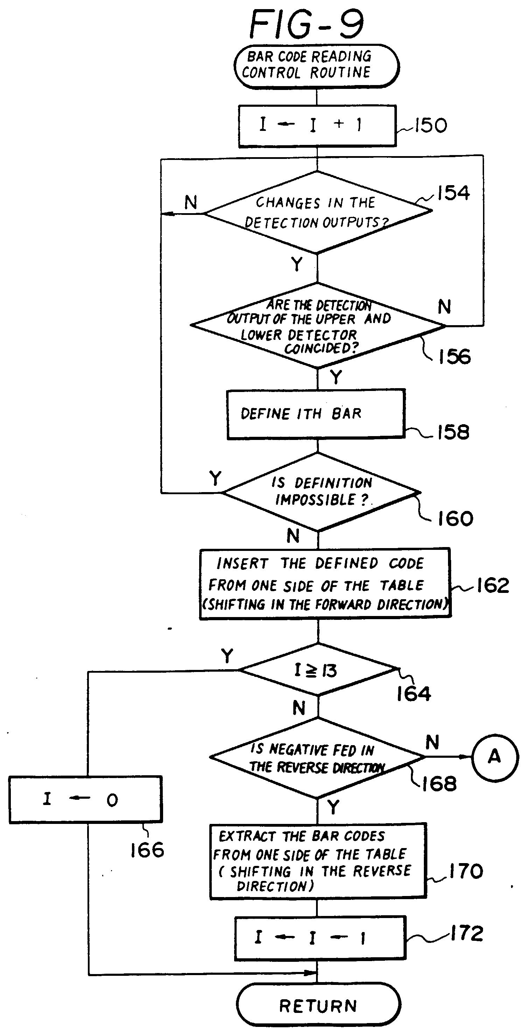

Next, the bar code read control subroutine which is executed in step 200 will be described below with reference to the flowchart in Fig. 9.

First, variable I is incremented in step 150, and it is then determined in step 154 whether or not there are changes in the outputs of the detecting units 58A, 58B, 58C and 58D while the negative 18 is being conveyed. If the answer is no, the processing executed in step 154 is repeated. If the answer is yes, the processing proceeds to step 156 where it is determined whether or not the outputs of the detecting units 58A, 58B, 58C and 58D of the detector located at one longitudinal end portion of the bar code 18A is identical with those of the detecting units of the detector located at the other longitudinal end portion of the bar code 18A. If the answer is no, i.e., if the two combinations of the outputs are identical, it is determined that the detected symbol may be a figure or the like which is not symmetrical in the vertical direction. In that case, since it is not necessary for the detected symbol to be collated with a bar code in response to the output of the detector, the processing returns to step 154. More specifically, figures and symbols other than the bar codes 18A may be present on the locus formed on the negative 18 by the detecting units 58A, 58B, 58C, and 58D. In consequence, in this embodiment, the bar codes 18A are read in the vicinity of both the two longitudinal end portions thereof (see the dot-dashed line and the dot-dot-dashed line in Fig. 2). This prevents the control device from erroneously recognizing figures as bar codes 18A, thereby preventing erroneous detection.

If it is determined in step 156 that the outputs of the upper and lower detecting units are identical, the control device determines that the detected symbol is a bar that constitutes a bar code, and therefore defines the detected symbol as an Ith bar of a bar code in step 158. If such determination is impossible this is recognized in step 160, processing returns to step 154. If the Ith bar is defined in step 158, this is recognized in step 160, and the defined bar is then inserted into the table in the RAM 42 from one side thereof (the right side as viewed in Fig. 6) in step 162. In that case, if a row of bars have been already set in the table, they are sequentially shifted in the forward direction.

Next, it is determined in step 164 whether or not the variable I is 13, which is the upper limit of a bar code. If it is determined that I $\geq$ 13, the control device determines that all the bars that constitute one bar code 18A have been read. Thereafter, the variable I is reset to 0 in step 166, and then the processing returns to the main routine.

If it is determined that I < 13 in step 164, the control device determines that reading of one bar code is not yet completed, and the processing goes to step 168 where it is determined whether or not the negative 18 is being fed in the reverse direction. If the negative 18 is not being fed in the reverse direction, the processing goes to step 108 of the main routine. If it is, the processing proceeds to step 170 where a number of bars corresponding to the amount of reverse feeding are moved out of the table from one side thereof (the right side thereof as viewed in Fig. 6). At that time, the remaining bars are sequentially shifted in the table in the reverse direction. Once the step 170 has been executed, variable I is decremented in step 172, and processing then returns to step 202.

Thus, the bars that constitute one bar code are detected one by one from the changes in the outputs of the detecting units 58A, 58B, 58C and 58D. In a case where the negative is fed in the reverse direction, a number of bars corresponding to the amount of reverse feeding are cancelled, thereby ensuring a reliable bar code reading operation which eliminates any reading errors.

Thus, in this embodiment, an image frame determined in accordance with the number of pulses from the pulse motor can be confirmed. In a case of a read error, a frame number representing an erroneously read image frame can be estimated. In consequence, it is possible to smoothly perform the printing operation in a designated order without temporarily interrupting the printing operation and without cancelling the printing operation to be performed on the image frames corresponding to erroneously read bar codes.

Further, in a case where a plurality of negatives are connected, the connected portion of the adjacent negatives can be recognized by detecting the splicing tape 19, thereby eliminating the possibility of the erroneous recognition of the image frames.

Furthermore, in this embodiment, since the position information detecting sensors are disposed in the vicinity of the two longitudinal end portions of a bar code, it is possible to prevent erroneous recognition of the figures or the like that moves on the same locus as that of the bar code 18A, thus improving the workability.

As will be understood from the foregoing description, the bar code reading device according to the present invention is capable of reliably reading only the bar codes affixed to a photographic film.

**Claims**

1. A device for reading bar codes (18A) affixed to a recording medium while the recording medium is being conveyed in the longitudinal direction, comprising:

bar code reading means (38, 39) disposed transverse to the direction in which said recording medium is conveyed for reading said bar codes;

wherein said bar code reading means comprises a pair of detecting sensors (38, 39) each one respectively disposed in the vicinity of the two longitudinal end portions of a bar of a bar code for detecting the different portions of said bar while simultaneously reading the same bar in said bar code;

comparison means (60-76) for comparing the results obtained by said bar code reading means;

said comparison means (60-76) compares the results of reading performed by one of the sensors with the results of reading performed by the other sensor;

determination means (40) for determining the bar code;

said determination means (34) determines that said data read represents a bar code when said comparison results are identical, and

a driving device (32) for conveying the recording medium in accordance with a control signal from a control device (34),

**characterized in that**

a position information detecting means (58) is provided for detecting splicing tapes (19) that connect, in the longitudinal direction, a plurality of recording mediums,

whereby said recording medium is an elongated photographic film (18) having said bar codes (18A) affixed in a predetermined order and at a constant pitch at the same positions relative to at least one image frame recorded in the longitudinal direction of said photographic film; and

said driving device (32) comprises a pulse motor which conveys the photographic film (18) to a bar code position in accordance with a number of pulses supplied from the control device (34), said number of pulses being defined on the basis of the number of steps separating a frame to be printed from a reference frame, a step corresponding to said pitch, multiplied by a predetermined number of pulses related to said pitch.

2. A bar code reading device for photographic film according to claim 1, further including a storage means (42) for storing data representing the bar code sections that constitute one bar code in the order in which they are read by said bar code reading means (38, 39) while shifting the data in said storage means.

3. A bar code reading device for a photographic film according to claim 2, wherein said storage means (42) feeds out said date representing the bar code sections that constitute the bar code in the order reverse to that in which the data are stored in said storage means while shifting them in said storage means when said photographic film (18) is fed in the reverse direction.

**Patentansprüche**

1. Eine Vorrichtung zum Lesen von an einem Aufzeichnungsmedium angebrachten Strichcodes (18A), während das Aufzeichnungsmedium in der Längsrichtung transportiert wird, mit:

einer Strichcode-Leseeinrichtung (38, 39), die quer zu der Richtung angeordnet ist, in welcher das Aufzeichnungsmedium transportiert wird, zum Lesen der Strichcodes;

wobei die Strichcode-Leseeinrichtung ein Paar von detektierenden Sensoren (38, 39) umfaßt, von denen jeder jeweils in der Nähe der zwei Längsendabschnitte eines Balkens von einem Strichcode zum Erfassen der unterschiedlichen Abschnitte des Balkens angeordnet ist, während gleichzeitig derselbe Balken in dem Strichcode gelesen wird;

einer Vergleichseinrichtung (60-76) zum Vergleichen der durch die Strichcode-Leseeinrichtung erhaltenen Resultate;

wobei die Vergleichseinrichtung (60-76) die Resultate des von einem der Sensoren durchgeführten Lesevorgangs mit den Resultaten des von dem anderen Sensor ausgeführten Lesevorgangs vergleicht;

einer Ermittlungseinrichtung (40) zum Bestimmen des Strichcodes;

wobei die Ermittlungseinrichtung (40) bestimmt, daß die gelesenen Daten einen Strichcode repräsentieren, wenn die Vergleichsresultate identisch sind, und

einer Antriebseinrichtung (32) zum Transportieren des Aufzeichnungsmediums entsprechend einem Steuersignal aus einer Steuereinrichtung (34),

**dadurch gekennzeichnet,**

daß eine Positionsinformationserfassungseinrichtung (58) zum Erfassen von Verbindungsbändern (19), welche in der Längsrichtung eine Vielzahl von Aufzeichnungsmedien verbinden, vorgesehen ist,

wobei das Aufzeichnungsmedium ein länglicher fotografischer Film (18) mit den daran angebrachten Strichcodes in einer vorbestimmten Reihenfolge und in konstantem Rasterabstand an den gleichen Positionen relativ zu wenigstens einem in der Längsrichtung auf dem fotografischen Film aufgezeichneten Einzelbild ist; und

daß die Antriebseinrichtung (32) einen Impulsmotor umfaßt, welcher den fotografischen Film (18) zu einer Strichcodeposition entsprechend einer Anzahl von von der Steuereinrichtung (34) zugeführten Impulsen transportiert, wobei die Anzahl von Impulsen auf der Basis der Anzahl von ein abzuziehendes Einzelbild von einem Referenzeinzelbild trennenden Schritten, wobei ein Schritt dem Rasterabstand entspricht, multipliziert mit einer vorbestimmten Anzahl von auf den Rasterabstand bezogenen Impulsen bestimmt ist.

2. Eine Strichcode-Lesevorrichtung für einen fotografischen Film nach Anspruch 1, welche ferner eine Speichereinrichtung (42) zum Speichern von Daten, welche die den Strichcode bildenden Strichcodeabschnitte repräsentieren, in der Reihenfolge, in der sie durch die Strichcode-Leseeinrichtung (38, 39) gelesen werden, enthält, wobei die Daten in der Speichereinrichtung verschoben werden.

3. Eine Strichcode-Lesevorrichtung für einen fotografischen Film nach Anspruch 2, wobei die Speichereinrichtung (42) die die Strichcode-Abschnitte repräsentierenden Daten, welche den Strichcode bilden, in der Reihenfolge ausgibt, welche umgekehrt zu derjenigen ist, in welcher die Daten in der Speichereinrichtung gespeichert werden, während sie in der Speichereinrichtung verschoben werden, wenn der fotografische Film (18) in der umgekehrten Richtung zugeführt wird.

**Revendications**

1. Dispositif pour lire des codes à barres (18A) apposés sur un support d'enregistrement tandis que le support d'enregistrement est en train d'être convoyé suivant la direction longitudinale, comprenant :

un moyen de lecture de code à barres (38, 39) disposé transversalement à la direction selon laquelle ledit support d'enregistrement est convoyé pour lire lesdits codes à barres ;
dans lequel ledit moyen de lecture de code à barres comprend une paire de capteurs de détection (38, 39) dont chacun est respectivement disposé au voisinage des deux parties d'extrémité longitudinales d'une barre d'un code à barres pour détecter les parties différentes de ladite barre en lisant simultanément la même barre dans ledit code à barres ;
un moyen de comparaison (60-76) pour comparer les résultats obtenus par ledit moyen de lecture de code à barres ;
ledit moyen de comparaison (60-76) compare les résultats de la lecture réalisée par l'un des capteurs aux résultats de la lecture réalisée par l'autre capteur ;
un moyen de détermination (40) pour déterminer le code à barres;
ledit moyen de détermination (40) détermine que lesdites données lues représentent un code à barres lorsque lesdits résultats de comparaison sont identiques ; et
un dispositif d'entraînement (32) pour convoyer le support d'enregistrement conformément à un signal de commande provenant d'un dispositif de commande (34),

caractérisé en ce que :

un moyen de détection d'information de position (58) est prévu pour détecter des bandes de raccordement (19) qui connectent, suivant la direction longitudinale, une pluralité de supports d'enregistrement,
et ainsi, ledit support d'enregistrement est un film photographique allongé (18) comportant lesdits codes à barres (18A) apposés selon un ordre prédéterminé et selon un pas constant aux mêmes positions par rapport à au moins un photogramme enregistré suivant la direction longitudinale dudit film photographique ; et
ledit dispositif d'entraînement (32) comprend un moteur impulsionnel qui convoie le film photographique (18) jusqu'à une position de code à barres conformément à un certain nombre d'impulsions appliquées depuis le dispositif de commande (34), ledit nombre d'impulsions étant défini sur la base du nombre d'espaces séparant un photogramme à tirer d'un photogramme de référence, un espace correspondant audit pas, multiplié par un nombre prédéterminé d'impulsions rapportées audit pas.

2. Dispositif de lecture de code à barres pour film photographique selon la revendication 1, incluant en outre un moyen de stockage (42) pour stocker des données représentant les sections de code à barres qui constituent un seul code à barres selon l'ordre selon lequel elles sont lues par ledit moyen de lecture de code à barres (38, 39) tout en décalant les données dans ledit moyen de stockage.

3. Dispositif de lecture de code à barres pour film photographique selon la revendication 2, dans lequel ledit moyen de stockage (42) évacue en sortie lesdites données représentant les sections de code à barres qui constituent le code à barres selon l'ordre inverse de celui selon lequel les données sont stockées dans ledit moyen de stockage tout en les décalant dans ledit moyen de stockage lorsque ledit film photographique (18) est avancé en sens inverse.

FIG. I

FIG. 2

EP 0 339 645 B1

Forward Feeding Direction

# FIG. 3

# FIG. 4

# FIG. 5

(A)

Negative Forward Feeding Direction

D C B A

⇒ Narrow White Bar

Time

(B)

Negative Forward Feeding Direction

D C B A

⇒ Wide Black Bar

Time

# FIG. 6

Forward Feeding Direction

Detecting Position

13  12  11  10  9  8  7  6  5  4  3  2  1

EP 0 339 645 B1

# FIG-7

```
        START

    ⟨ I ← 0
      F ← 0        ～100
      G ← 0 ⟩

    SET A NEGATIVE       ～102

    DESIGNATE THE IMAGE FRAME   ～104
    NUMBERS TO BE PRINTED

                        N
        START  ──────────┐
         ～106            │
          Y              │
                         │
    DRIVE STEPPING MOTOR  ----  NEGATIVE IS CONVEYED
     ～107
   (A)→

         IS SPLICING      Y
         TAPE DETECTED  ──────────┐
          ～108                    │
           N                       │
      Y                        G ← 0
    ┌─ G = 1  ～110            ～109
    │     N  ←──────────────────┘
    │
    │  BAR CODE CHECKING   ～112
    │  CONTROL
    └──→

    CONVEY NEGATIVE IN ACCORDANCE  ～114
    WITH THE NUMBER OF PULSES

    POSITION NEGATIVE AT    ～116
    PRINTING POSITION

    PRINTING        ～118

    N
    ┌── COMPLETED   ～120
    │       Y
             END
```

# FIG-8

```
        ( BAR CODE CHECKING )
        ( CONTROL ROUTINE   )
                  │
    ┌─────────────────────────────┐
    │  BAR CODE READING CONTROL   │── 200
    └─────────────────────────────┘
                  │
    ┌─────────────────────────────┐
    │  CALCULATE THE NUMBER       │
    │  OF PULSES P FOR THE        │── 202
    │  REFERENCE POINT            │
    └─────────────────────────────┘
                  │
         N    ◇ F = 1 ◇ ── 204
    ┌────────────┘  │ Y
    │          N ◇ MR = P ◇ ── 210
    │     206   │ Y        └──── N
┌──────────┐    │              ┌──────────┐
│ MR ← P   │    │              │  MR ← P  │── 212
└──────────┘    │              └──────────┘
    │           │                   │
┌──────────┐ ┌──────────┐           │
│  F ← 1   │ │  G ← 1   │── 214     │
└──────────┘ └──────────┘           │
    208         │                   │
                │
         ┌──────────┐
         │ MD ← MR  │── 216
         └──────────┘
                │
         ┌──────────┐
         │  F ← 0   │── 218
         └──────────┘
                │
         ( RETURN )
```

# FIG-9

BAR CODE READING CONTROL ROUTINE

I ← I + 1 ~150

CHANGES IN THE DETECTION OUTPUTS? 154
N →
Y

ARE THE DETECTION OUTPUT OF THE UPPER AND LOWER DETECTOR COINCIDED? N
156
Y

DEFINE ITH BAR ~158

IS DEFINITION IMPOSSIBLE? 160
Y
N

INSERT THE DEFINED CODE FROM ONE SIDE OF THE TABLE (SHIFTING IN THE FORWARD DIRECTION) ~162

I ≧ I3 164
Y
N

IS NEGATIVE FED IN THE REVERSE DIRECTION N → (A)
168
Y

I ← 0 166

EXTRACT THE BAR CODES FROM ONE SIDE OF THE TABLE (SHIFTING IN THE REVERSE DIRECTION) ~170

I ← I - 1 ~172

RETURN

18